(19) Europäisches Patentamt
European Patent Office
Office européen des brevets

(11) Veröffentlichungsnummer: **0 266 662 B1**

(12) **EUROPÄISCHE PATENTSCHRIFT**

(45) Veröffentlichungstag der Patentschrift: **10.06.92**

(51) Int. Cl.$^5$: **C08G 75/02**

(21) Anmeldenummer: **87115757.4**

(22) Anmeldetag: **27.10.87**

# (54) Verfahren zur Herstellung von Polyarylensulfiden mit erniedrigter Kristallisationstemperatur.

(30) Priorität: **06.11.86 DE 3637813**

(43) Veröffentlichungstag der Anmeldung:
**11.05.88 Patentblatt 88/19**

(45) Bekanntmachung des Hinweises auf die Patenterteilung:
**10.06.92 Patentblatt 92/24**

(84) Benannte Vertragsstaaten:
**BE DE FR GB IT**

(56) Entgegenhaltungen:
**EP-A- 0 033 906**
**EP-A- 0 121 206**
**EP-A- 0 215 312**
**US-A- 3 303 170**

(73) Patentinhaber: **BAYER AG**
**W-5090 Leverkusen 1 Bayerwerk(DE)**

(72) Erfinder: **Ostlinning, Edgar, Dr.**
**Rembrandtstrasse 37**
**W-4000 Düsseldorf 1(DE)**
Erfinder: **Dorf, Ernst-Ulrich, Dr.**
**Bodelschwinghstrasse 16**
**W-4150 Krefeld 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Herstellung von Polyarylensulfiden mit erniedrigter Kristallisationstemperatur.

Polyarylensulfide und ihre Herstellung sind bekannt (z.B. US-A-2 513 188).

Polyarylensulfide sind teilkristalline thermoplastischverarbeitbare Polymere mit hoher Wärmeformbeständigkeit. Außerdem sind sie gegenüber Chemikalien sehr beständig.

Für spezielle Anwendungen, beispielsweise wenn eine frühzeitige Verfestigung der Fließfront des geschmolzenen Polymeren beim Ausgießen von Formen vermieden werden soll, ist eine verzögert einsetzende Kristallisation des geschmolzenen Polymeren vorteilhaft.

Gegenstand der Erfindung ist daher ein Verfahren zur Herstellung von hochkristallinen Polyarylensulfiden mit erniedrigter Kristallisationstemperatur, die gegebenenfalls verzweigt sein können, durch Umsetzung von

a) 75-99,5 Mol-% Dihalogenaromaten der Formel

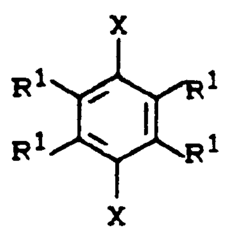

(I),

in der

X für zueinander para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei jeweils zwei zueinander orthoständige Rest $R^1$ unter Einbeziehung der C-Atome im Ring, an die sie gebunden sind, zu einem aromatischen oder heterocyclischen Ring mit 5 bis 6 Ringatomen verknüpft sein können, wobei bis zu drei Ring C-Atome durch O, S oder N ersetzt sein können,

b) 0 bis 5 Mol-%, bevorzugt 0 bis 1,25 Mol-%, bezogen auf die Dihalogenaromaten der Formel I, eines Tri-oder Tetrahalogenaromaten der Formel

$ArX_n$ (II),

in welcher

Ar ein aromatischer Rest mit 6 bis 14 C-Atomen oder heterocyclischer Rest mit 6 bis 14 C-Atomen ist, wobei bis zu 4 Ringer C-Atome durch Heteroatome wie N, O oder S ersetzt sein können,

X für Halogen wie Chlor oder Brom steht und

n für die Zahl 3 oder 4 steht,

c) gegenbenenfalls üblichen Kettenabbrechern

d) Alkalisulfiden, bevorzugt Natrium- oder Kaliumsulfid oder deren Mischung, zusammen mit Alkalihydrogensulfiden, bevorzugt Natrium- oder Kaliumhydrogensulfid oder deren Mischung, in Form ihrer Hydrate oder wäßrigen Mischungen gegebenenfalls zusammen mit Katalysatoren oder anderen Hilfsstoffen in einem Lösungsmittel und

e) 0,5 bis 25,bevorzugt 0,5 bis 10, besonders bevorzugt 1 bis 7,5 Mol-% eines Comonomeren oder einer Mischung verschiedener Comonomeren bei einem Druck von 1 bis 50 bar, dadurch gekennzeichnet, daß die Comonomeren ausgewählt sind aus der Gruppe 3,4-Dichlordiphenylsulfon, 3,4-Dichlorbenzophenon, N-(3,4-dichlorphenyl)-phthalimid, 4,4′-Dichlortriphenylamin, N-Phenyl-4,5-dichlorphthalimid, N-(3,4-dichlorphenyl)-hexahydrophthalimid, 2,4-Dichlor-6-phenyltriazin-(1,3,5), 2,3-Dichlorchinoxalin, 2,3-Dichlor-6-methyl-chinoxalin, N-(3,4-dichlorphenyl)-3,4-diphenyldicarbonsäureimid und/oder 2,6-Dichlorbenzothiazol.

Beispiele für erfindungsgemäß einzusetzende Dihalogenaromaten der Formel (I) sind:

1,4-Dichlorbenzol, 1,4-Dibrombenzol, 1-Brom-4-chlorbenzol, 2,5-Dichortoluol, 2,5-Dichlorxylol, 1,4-Dichlor-2-ethylbenzol, 1,4-Dibrom-2-ethylbenzol, 1-Brom-4-chlorethylbenzol, 1,4-Dichlor-2,3,5,6-tetramethylbenzol, 1,4-Dichlor-2-cyclohexylbenzol, 1,4-Dichlor-2-hexylbenzol, 2,5-Dichlordiphenyl, 2-Benzyl-1,4-dichlorbenzol, 2,5-Dibromdiphenyl, 2,5-Dichlor-4′-methyl-diphenyl, 2,4-Dibrom-4′-methyl-diphenyl. Sie sind allein oder im

Gemisch miteinander einsetzbar.

Besonders bevorzugt sind 1,4-Dichlorbenzol und/oder 1,4-Dibrombenzol.

Geeignete Lösungsmittel sind polare organische Lösungsmittel z.B. Lactame wie N-Alkyllactame, beispielsweise N-Methylpyrrolidon, N-Ethylpyrrolidon, N-Isopropylpyrrolidon, N-Methylpiperidon, N-Methylcaprolactam, N-Ethylcaprolactam, oder N,N′-Dimethylimidazolidinon, 1-Methyl-1-oxo-phospholan oder deren Gemische.

Der Siedepunkt der Lösungsmittel sollte bei 200 bis 350° C liegen.

Als übliche Kettenabbrecher können verwendet werden

1) aromatische Monohalogenverbindungen wie z.B. Chlorbenzol, Brombenzol, 4-Chlortoluol, 4-Bromtoluol, 4-Chlorbiphenyl, 4-Chlordiphenylsulfon etc.,

2) Phenole wie z.B. Phenol, para-Cresol, ortho-Cresol, m-Cresol etc.,

3) Thiophenole wie z.B. Thiophenol, n-Methylthiophenol, 3-Methylthiophenol, 4-Mercaptobiphenyl etc.

Als Katalysatoren können Alkalifluoride, Alkaliphosphate, Alkaliphosphonate, Alkalisulfite, Alkaliacetate etc. verwendet werden.

Die Umsetzung kann in verschiedener Weise erfolgen:

Die Alkalisulfide und/oder Alkalihydrogensulfide werden vorzugsweise in Form ihrer Hydrate und wäßrigen Mischungen oder wäßrigen Lösungen eingesetzt. Die Reaktionsmischung wird partiell oder vorzugsweise vollständig entwässert. Möglich ist auch die Verwendung von wasserfreien Sulfiden. Das im Umsetzungsgemisch vorhandene Wasser kann direkt oder mit Hilfe von Azeotropbildnern, wobei bevorzugt als Azeotropbildner die Dihalogenaromaten der Formel (I) eingesetzt werden, abdestilliert werden. Für die Entwässerung können alle Reaktionspartner gemischt werden und dann wird das Gesamtgemisch entwässert. Das Alkalisulfid und/oder Alkalihydrogensulfid kann auch separat mit einem Teilder Reaktionskomponenten oder alleine entwässert werden.

In einer Ausführungsform der Reaktion werden die Reaktionspartner gegebenenfalls zusammen mit einem Reaktionsbeschleuniger bzw. einem Gemisch von Reaktionsbeschleunigern in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so auch vermieden werden.

Wird völlig entwässert, so kann druckfrei bis zu ca. 10 bar, vorzugsweise 3 bar, Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiten Spanne variiert werden. Sie kann 1 bis 48 Stunden, bevorzugt 1 bis 18 Stunden betragen. Die Reaktionstemperaturen liegen zwischen 150° C und 300° C, vorzugsweise zwischen 170° C und 280° C.

Die Zugabe der Comonomeren und Kettenabbrecher kann vor oder während der Entwässerung erfolgen. Eine Zugabe nach beendeter Entwässerung ist ebenfalls möglich. Die Zugabe kann über einen gewissen Zeitraum, z.B. innerhalb der ersten 3 Stunden der Reaktion, portionsweise zu bestimmten Zeiten des Reaktionsablaufes oder direkt durch Zugabe der berechneten Gesamtmenge zu einem definierten Zeitpunkt der Reaktion erfolgen.

Die Aufarbeitung des Umsetzungsgemisches und die Isolierung der Polyarylensulfide kann in bekannter Weise erfolgen.

Das Polyarylensulfid kann direkt aus der Umsetzungslösung oder erst z.B. nach Zugabe von Wasser und/oder verdünnten Säuren nach den üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lössungsmittels und eine anschließende Wäsche, wie oben beschrieben, gewonnen werden.

Das Polyarylensulfid kann auch durch Eintragen in organische Lösungsmittel, beipsielsweise in Alkohole wie Ethanol, Methanol, 1-Propanol, 2-Propanol, in Ketone wie Aceton, Methylethylketon gefällt und anschließend von Verunreinigungen befreit werden.

Die Aufarbeitung ist sowohl kontinuierlich als auch diskontinuierlich möglich.

Die nach dem erfindungsgemäßen Verfahren hergestellten Polyarylensulfide zeichnen sich durch eine schon bei tieferer Temperatur (ca. 150 - 250° C) einsetzende Kristallisation bei im wesentlichen gleicher Kristallinität und unverändertem Schmelzverhalten aus. Dies erleichtert z.B. die Verarbeitung zu Folien, Fasern und Spritzgußteilen mit langer Fließlänge oder kleinen Querschnitten.

Die erfindungsgemäß hergestellten Polyarylensulfide könen mit anderen Polymeren, Pigmenten und Füllstoffen, beispielsweise Graphit, Metallpulver, Glaspulver, Quarzmehl, Quarzgut, Glasfasern und Kohlefasern gemischt oder mit den für Polyarylensulfiden üblichen Stabilisatoren oder Entformungsmitteln versetzt werden.

Im allgemeinen wird das Schmelzfließverhalten der Polyarylensulfiden nach ASTM 1238-70 bei 316 °C unter Verwendung eines 5 kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa.s) bei 306 °C in Abhängigkeit von der Schubspannung (in Pa) mit Hilfe eines Instron-Rotationsviskosimeters bestimmt.

Man kann auf diese Weise die Schmelzviskosität in einem sehr weiten Bereich von $10^1$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron.

Angegeben wird die Schmelzviskosität, die bei einer Schubspannung von $\tau$ = $10^2$ Pa gemessen wird.

Die angegebenen Schmelz- und Kristallisationspunkte [ °C] wurden durch DSC (= "differential scanning calorimetry") auf einem kommerziell erhältlichen Maßgerät bei Aufheiz-bzw. Abkühlraten von 20 K/min gemessen.

Die erfindungsgemäßen Polyarylensulfide besitzen direkt nach der Isolierung aus dem Reaktionsgemisch im allgemeinen Schmelzviskositäten von $0{,}1.10^1$ bis $5.10^4$ Pa.s, vorzugweise $0{,}1.10^1$ bis $1{,}5.10^3$ Pa.s. Sie können direkt durch Extrusion, extrusionsblasen, Spritzgießen oder sonst übliche Verarbeitungstechniken zu Folien, Fasern oder Formkörpern verarbeitet werden. Diese können in üblicher Weise Verwendung finden, z.B. als Automobilteile, Armaturen, Elektroteile, z.B. Schalter, elektronische Tafeln, elektronische Bauteile, chemikalienreistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie Haushaltsgeräten etc.

Beispiel 1 (Vergleichsbeispiel)

In einem 5 1-Reaktionskessel, der mit einem Thermometer, Rührer, kühlbarer Kolonne, Destillatteiler, Rückflußkühler und zwei Tropftrichtern ausgerüstet ist, werden unter Stickstoff 2693,0 g N-Methylcaprolactam, 608,7 g 1,4-Dichlorbenzol und 27,3 g Phenol vorgelegt und zum Rückfluß erwärmt. Dazu wird eine Lösung von 1147,5 g Natriumsulfidhydrat, 4,4 g Natriumhydroxid und 141,1 g Caprolactam so zugetropft, daß das zugeführte Wasser gleichzeitig azeotrop mit 1,4-Dichlorbenzol abdestillieren kann. Gleichzeitig werden weitere 608,7 g 1,4-Dichlorbenzol zur Reaktionsmischung kontinierlich zugegeben. Zur Erhaltung der Stöchiometrie wird abdestillierendes 1,4-Dichlorbenzol nach Abtrennung des Wassers wieder in den Ansatz zurückgeführt. Nach beendeter Zugabe und beendeter Entwässerung wird die Kolonne auf Rückfluß gestellt, der Ansatz weitere 10 Stunden zum Rückfluß erhitzt und das Produkt anschließend in üblicher Weise isoliert. (Werte der DSC-Messung siehe Tabelle).

Beispiel 2

Wie Beispiel 1, jedoch ohne Phenol. Außerdem werden nur 566,1 g 1,4-Dichlorbenzol vorgelegt. Zusätzlich werden 47,7 g 3,4-Dichlordiphenylsulfon und 63,0 g 4-Chlordiphenylsulfon vorgelegt.

Beispiel 3

Wie Beispiel 2, jedoch wurden anstelle von 4-Chlordiphenylsulfon 35,1 g Phenol eingesetzt.

Beispiel 4

Wie Beispiel 3, jedoch wurden anstelle von 3,4-Dichlordiphenylsulfon 48,5 g N-(3,4-Dichlorphenyl)-phthalimid im Anschluß an die Entwässerung zugegeben.

Beispiel 5

Wie Beispiel 1, jedoch ohne Phenol und zusätzlich 52,0 g 4,4′-Dichlor-triphenylamin. Außerdem wurden

noch 584,4 g 1,4-Dichlorbenzol zudosiert.

Beispiel 6

Wie Beispiel 5, jedoch wurden anstelle von 4,4'-Dichlortriphenylamin 41,9 g 2,6-Dichlor-benzothiazol vorgelegt.

Beispiel 7

Wie Beispiel 5, jedoch wurden anstelle von 4,4'-Dichlortriphenylamin 37,5 g 2,4-Dichlor-6-phenyl-triazin eingesetzt.

Beispiel 8

Wie Beispiel 5, jedoch wurden anstelle von 4,4'-Dichlortriphenylamin 35,3 g 2,3-Dichlor-6-methyl-chinoxalin eingesetzt.

Die folgende Tabelle 1) enthält eine Aufstellung der durch DSC-Messung bestimmten Schmelzpunkte (Tm) und der in der Abkühlkurve auftretenden Kristallisationspunkte (Tk), jeweils mit einer Rate von 20 K/min gemessen.

Tabelle 1

| Beispiel | Tm[°C] | Tk[°C] |
|---|---|---|
| 1 | 285,2 | 234,7 |
| 2 | 278,8 | 192,2 |
| 3 | 281,0 | 209,0 |
| 4 | 269,8 | 187,1 |
| 5 | 270,7 | 208,2 |
| 6 | 268,4 | 201,1 |
| 7 | 281,3 | 192,0 |
| 8 | 281,9 | 200,5 |

**Patentansprüche**

1. Verfahren zur Herstellung von hochkristallinen Polyarylensulfiden mit niedriger Kristallisationstemperatur, die gegebenenfalls verzweigt sein können, durch Umsetzung von
   a) 75-99,5 Mol-% Dihalogenaromaten der Formel

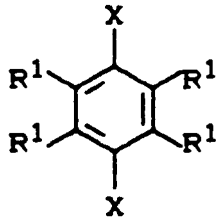

(I),

in der

X für zueinander para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei jeweils zwei zueinander orthoständige Reste $R^1$ unter Einbeziehung der C-Atome im Ring, an die sie gebunden sind, zu einem aromatischen oder heterocyclischen Ring mit 5 bis 6 Ringatomen, wobei bis zu drei Ring-C-atome durch O, S oder N ersetzt sein können, verknüpft wein können.

b) 0 bis 5 Mol-%, bezogen auf die Dihalogenaromaten der Formel I, eines Tri-oder Tetrahalogenaromaten der Formel

$ArX_n$ (II),

in welcher

Ar ein aromatischer Rest mit 6 bis 14 C-Atomen oder heterocyclischer Rest mit 6 bis 14 C-Atomen ist, wobei bis zu 4 Ring-C-Atome durch Heteroatome wie N, O oder S ersetzt sein können, ist,

X für Halogen wie Chlor oder Brom steht und

n für die Zahl 3 oder 4 steht,

c) gegebenenfalls üblichen Kettenabbrechern,

d) Alkalisulfiden, zusammen mit Alkalihydrogensulfiden in Form ihrer Hydrate oder wäßrigen Mischungen, gegebenenfalls zusammen mit Katalysatoren oder anderen Hilfsstoffen in einem Lösungsmittel, und

e) 0,5 bis 25 Mol-% eines Comonomeren oder einer Mischung verschiedener Comonomeren, bei einem Druck von 1 bis 50 bar, dadurch gekennzeichnet, daß die Comonomeren ausgewählt sind aus der Gruppe

3,4-Dichlordiphenylsulfon, 3,4-Dichlorbenzophenon, N-(3,4-dichlorphenyl)-phthalimid, 4,4'-Dichlor-triphenylamin, N-Phenyl-4,5-dichlorphthalimid, N-(3,4-dichlorphenyl)-hexahydrophthalimid, 2,4-Dichlor-6-phenyltriazin-(1,3,5), 2,3-Dichlor-chinoxalin, 2,3-Dichlor-6-methyl-chinoxalin, N-(3,4-dichlorphenyl)-3,4-diphenyldicarbonsäureimid und/oder 2,6-Dichlorbenzothiazol.

**2.** Verfahren nach Anspruch 1, dadurch gekennzeichnet, daß 1,4-Dichlorbenzol als Dihalogenaromat der Formel (I) eingesetzt wird.

**3.** Verfahren nach Anspruch 1, dadurch gekennzeichnet, daß ein Lactam als Lösungsmittel verwendet wird.

## Claims

**1.** A process for the production of highly crystalline, optionally branched polyarylene sulfides having a low crystallization temperature by reaction of

a) 75 to 99.5 mol-% aromatic dihalogen compounds corresponding to the formula

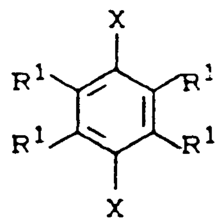

(I),

in which

the X's represent halogens, such as chlorine or bromine, in the para position to one another and

the $R^1$'s may be the same or different and represent hydrogen, $C_{1-4}$ alkyl, $C_{5-10}$ cycloalkyl, $C_{6-10}$ aryl, $C_{7-14}$ alkylary, $C_{7-14}$ arylalkyl; two substituents $R^1$ in the ortho position to one another, including the C atoms in the ring to which they are attached, may be linked to form an aromatic or heterocyclic ring containing 5 or 6 ring atoms, up to three ring C atoms being replaceable by O, S or N,

b) 0 to 5 mol-%, based on the aromatic dihalogen compounds of formula I, of an aromatic tri- or tetrahalogen compound corresponding to the formula

$ArX_n$ (II),

in which

Ar is an aromatic radical containing 6 to 14 carbon atoms or a heterocyclic radical containing 6 to 14 carbon atoms, up to 4 ring carbon atoms being replaceable by hetero atoms, such as N, O or S,

X is halogen, such as chlorine or bromine, and

n is the number 3 or 4,

c) optionally typical chain terminators,

d) alkali metal sulfides together with alkali metal hydrogen sulfides in the form of their hydrates or aqueous mixtures, optionally together with catalysts or other auxiliaries in a solvent, and

e) 0.5 to 25 mol-% of a comonomer or a mixture of various comonomers under a pressure of 1 to 50 bar, characterized in that the comonomers are selected from the group consisting of 3,4-dichlorodiphenyl sulfone, 3,4-dichlorobenzophenone, N-(3,4-dichlorophenyl)-phthal-imide, 4,4'-dichlorotriphenylamine, N-phenyl-4,5-dichlorophthalimide, N-(3,4-dichlorophenyl)-hexahydrophthalimide, 2,4-dichloro-6-phenyl-1,3,5-triazine, 2,3-dichloroquinoxaline, 2,3-dichloro-6-methylquinoxaline, N-(3,4-dichlorophenyl)-3,4-diphenyl dicarboxylic acid imide and/or 2,6-dichlorobenzothiazole.

**2.** A process as claimed in claim 1, characterized in that 1,4-dichlorobenzene is used as the aromatic dihalogen compound corresponding to formula (I).

**3.** A process as claimed in claim 1, characterized in that a lactam is used as the solvent.

**Revendications**

**1.** Procédé pour la préparation de poly-(sulfures d'arylène) à haute cristallinité et basse température de cristallisation, ces polymères étant éventuellement ramifiés, par réaction de :

a) 75 à 99,5 mol% de composés dihalogénoaromatiques de formule

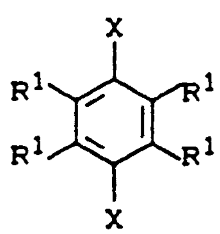

(I)

dans laquelle :
tes symboles X représentent des halogènes tels que le chlore ou le brome, en position mutuelle para, et
les symboles $R^1$, ayant des significations identiques ou différentes, représentent chacun l'hydrogène, un groupe alkyle en $C_1$-$C_4$,cycloalkyle en $C_5$-$C_{10}$, aryle en $C_6$-$C_{10}$, alkylaryle en $C_7$-$C_{14}$,arylalkyle en $C_7$-$C_{14}$, deux groupes $R^1$ en position mutuelle ortho pouvant également former ensemble et avec les atomes de carbone du cycle auquel ils sont fixés un noyau aromatique ou hétérocyclique à 5 ou 6 atomes cycliques, et 1 à 3 atomes de carbone cycliques pouvant être remplacés par O, S ou N,
b) 0 à 5 mol%, par rapport aux composés dihalogénoaromatiques de formule I, d'un composé tri- ou tétrahalobénoaromatique de formule

$ArX_n$ (II)

dans laquelle :
Ar représente un radical aromatique en $C_6$-$C_{14}$ ou un radical hétérocyclique en $C_6$-$C_{14}$, dans lesquels 1 à 4 atomes de carbone cycliques peuvent être remplacés par des hétéroatomes tels que N, O ou S,
chacun des symboles X représente un halogène, tel que le chlore ou le brome, et
n est égal à 3 ou 4,
c) le cas échéant des coupeurs de chaînes usuels,
d) des sulfures alcalins, avec des hydrogénosulfures alcalins, à l'état d'hydrates ou de mélanges aqueux$_1$ le cas échéant avec des catalyseurs ou d'autres produits auxiliaires dans un solvant, et
e) 0,5 à 25 mol% d'un comonomère ou d'un mélange de plusieurs comonomères, à une pression de 1 à 50 bar, caractérisé en ce que les comonomères sont choisis dans le groupe formé par la 3,4-dichlorodiphénylsulfone, la 3,4-dichlorobenzophénone, le N-(3,4-dichlorophényl)phtalimide, ta 4,4'-dichlorotriphénylamine, le N-phènyl-4,5-dichlorophtalimide, le N-(3,4-dichlorophényl)-hexahydrophtalimide, la 2,4-dichloro-6-phényltriazine-(1,3,5), ta 2,3-dichloroquinoxaline, la 2,3-dichloro-6-méthylquinoxaline, le N-(3,4-dichlorophényl)-3,4-diphényldicarboximide et/ou le 2,6-dichloro-benzothiazole.

**2.** Procédé selon la revendication 1, caractérisé en ce que l'on utilise en tant que composé dihalogénoaromatique de formule I le 1,4-dichlorobenzène.

**3.** Procédé selon la revendication 1, caractérisé en ce que le solvant utilisé est un lactame.